# EUROPEAN PATENT APPLICATION

(11) **EP 4 351 107 A1**
(43) Date of publication of application: **10.04.2024**
(21) Application number: 22831295.5
(22) Date of filing: 31.03.2022
(51) Int. Cl.: H04L 67/1095

(54) **DATA TRANSMISSION METHOD AND ELECTRONIC DEVICE**

(30) Priority: 30.06.2021 CN 202110733685
(71) Applicant: Huawei Technologies Co., Ltd., Longgang Shenzhen, Guangdong 518129 (CN)
(72) Inventor: WANG, Chunfeng, Shenzhen, Guangdong 518129 (CN)
(74) Representative: Epping - Hermann - Fischer
(86) International application number: PCT/CN2022/084318
(87) International publication number: WO 2023/273464

(57) **Abstract**

Embodiments of this application provide a data transmission method and an electronic device, and relate to the field of electronic technologies. A specific solution is: receiving, by a first electronic device, a request message from a second electronic device, where the request message is used to request to establish a data transmission connection, the request message includes connection information of the second electronic device, and the data transmission connection is used to transmit service data of an application; and generating an entry based on the connection information of the second electronic device, connection information of the first electronic device, and information about the application, where the entry includes connection identification information and application identification information, the connection identification information indicates the data transmission connection, and the application identification information indicates the application; receiving service data from the second electronic device, where the service data carries connection identification information of data transmission; and if the identification information of the data transmission is consistent with the identification information in the entry, copying the service data from a driver to the application indicated by the application identification information. Embodiments of this application are used in a data transmission process.

## Description

This application claims priority to Chinese Patent Application No. 202110733685.0, filed with the China National Intellectual Property Administration on June 30, 2021 and entitled "DATA TRANSMISSION METHOD AND ELECTRONIC DEVICE", which is incorporated herein by reference in its entirety.

### TECHNICAL FIELD

Embodiments of this application relate to the field of electronic technologies, and in particular, to a data transmission method and an electronic device.

### BACKGROUND

With an increasing demand for interconnection between electronic devices, such as sharing of a file between electronic devices, or projection or sound projection by an electronic device to another electronic device, people have an increasing requirement for a file transmission capability of the electronic device.

At present, in a process of transmitting a file by the electronic device, when a receiving-end electronic device receives file data in a kernel and transfers the file data to an application, the electronic device needs to copy the file data a plurality of times, which causes a performance problem.

### SUMMARY

Embodiments of this application provide a data transmission method and an electronic device. A receiving-end electronic device may transparently transmit data from a driver to a corresponding application for processing, to reduce a quantity of times of copying the data and improve a data transmission rate.

To achieve the foregoing objectives, the following technical solutions are used in embodiments of this application.

According to a first aspect, an embodiment of this application provides a data transmission method, applied to a first electronic device, where the first electronic device includes a driver and an application, and the method includes: receiving a request message from a second electronic device, where the request message is used to request to establish a data transmission connection, the request message includes connection information of the second electronic device, and the data transmission connection is used to transmit service data of the application; generating an entry based on the connection information of the second electronic device, connection information of the first electronic device, and information about the application, where the entry includes connection identification information and application identification information, the connection identification information indicates the data transmission connection, and the application identification information indicates the application; receiving service data from the second electronic device, where the service data carries connection identification information of data transmission; and if the connection identification information of the data transmission is consistent with the connection identification information in the entry, copying the service data from the driver to the application indicated by the application identification information.

In this solution, after establishing a connection to the second electronic device, the first electronic device may generate the entry, and when the connection identification information of the data transmission corresponding to the service data from the second electronic device is consistent with the connection identification information in the entry, the first electronic device may copy the service data from the driver to a corresponding application for processing, so that a quantity of times of copying the service data when the kernel receives the service data and transfers the service data to the application can be reduced, thereby improving data transmission efficiency.

It should be noted that the first electronic device herein may be a second mobile phone in the following embodiments, and the second electronic device may be a first mobile phone in the following embodiments.

With reference to the first aspect, in a possible design manner, the method further includes: the copying the service data from the driver to the application indicated by the application identification information indicates transparently transmitting the service data from the driver to the application indicated by the application identification information.

Herein, when the service data is copied from the driver to the application indicated by the application identification information, the service data does not need to be processed by using a kernel protocol stack. Therefore, it may also be considered that the first electronic device transparently transmits the service data from the driver to the application indicated by the application identification.

With reference to the first aspect, in a possible design manner, the connection information of the second electronic device includes one or more of an address, a port number, a protocol number, or an interface identifier of the second electronic device; and the connection information of the first electronic device includes one or more of an address, a port number, or an interface identifier of the first electronic device.

With reference to the first aspect, in a possible design manner, the connection identification information in the entry includes any one type of information in 5-tuple information, 3-tuple information, 7-tuple information, or an interface identifier.

The first electronic device may generate the entry based on the connection information of the second electronic device, the connection information of the first electronic device, and the information about the application. Based on different connection information of the second electronic device and different connection information of the first electronic device, the connection identification information in the entry generated by the first electronic device may be any one type of information in the 5-tuple information, the 3-tuple information, the 7-tuple information, or the interface identifier, and the connection identification information may indicate the data transmission connection.

With reference to the first aspect, in a possible design manner, the entry further includes a minimum time to live TTL value and a maximum TTL value.

In this solution, a data transmission path can be traced by using the minimum TTL value and the maximum TTL value, to ensure data transmission security.

With reference to the first aspect, in a possible design manner, after the copying the service data from the driver to the application indicated by the application identification information, the method further includes: processing the service data by using the application indicated by the application identification information, where the processing includes decapsulating a standard transport layer header and a standard IP layer header.

In this solution, after the first electronic device transparently transmits the service data from the driver to the corresponding application, the application performs processing such as decapsulating the standard transport layer header and the standard IP layer header on the service data.

With reference to the first aspect, in a possible design manner, after the copying the service data from the driver to the application indicated by the application identification information, the method further includes: deleting the entry.

In this solution, the first electronic device deletes the entry after the data transmission, so that storage space can be saved.

With reference to the first aspect, in a possible design manner, the deleting the entry includes: deleting the entry after the data transmission connection is disconnected.

After the data transmission connection is disconnected, the first electronic device deletes the entry, to avoid repeated connection establishment during subsequent data transmission.

With reference to the first aspect, in a possible design, the method further includes: deleting an expired entry periodically.

The expired entry may be considered as a useless entry, for example, an entry that is not deleted in time when an application exits abnormally. In this way, storage space can be saved, and query time can be saved.

With reference to the first aspect, in a possible design manner, the application is an application with a large data throughput, an application with high use frequency, or a real-time application.

It may be considered that, in this embodiment of this application, the application with a large data throughput, the application with high use frequency, or the real-time application is used as an application with a relatively high priority, and service data corresponding to these applications is transparently transmitted from the driver to corresponding applications for processing, so that a processing speed of the service data corresponding to the relatively high-priority application can be improved.

With reference to the first aspect, in a possible design manner, the application includes a first module, the driver includes a second module, and the copying the service data from the driver to the application indicated by the application identification information includes: copying the service data from the second module in the driver to the first module in the application indicated by the application identification information.

In this solution, the first module is disposed in the application, the second module is disposed in the driver, and the second module in the driver sends the service data to the first module in the corresponding application.

According to a second aspect, an embodiment of this application provides an electronic device, including one or more processors and one or more memories. The one or more memories are coupled to the one or more processors, the one or more memories are configured to store computer program code, the computer program code includes computer instructions, and when the one or more processors execute the computer instructions, the electronic device performs the method according to the first aspect and any one of the possible designs of the first aspect.

According to a third aspect, an embodiment of this application provides a computer storage medium, including computer instructions. When the computer instructions are run on an electronic device, the electronic device is enabled to perform the method according to the first aspect and any one of the possible designs of the first aspect.

According to a fourth aspect, an embodiment of this application provides a computer program product. When the computer program product runs on a computer, the computer is enabled to perform the method according to the first aspect and any one of the possible designs of the first aspect.

Any apparatus, computer storage medium, computer program product, chip, or communication system provided above is configured to perform the corresponding method provided above. Therefore, for beneficial effects that can be achieved, refer to the beneficial effects of the corresponding solution in the corresponding method provided above. Details are not described herein again.

### BRIEF DESCRIPTION OF DRAWINGS

FIG. 1 is a schematic diagram of a basic structure of a network stack;
FIG. 2 is a schematic diagram of an operating system architecture;
FIG. 3A is a schematic diagram of a data transmission process;
FIG. 3B is another schematic diagram of a data transmission process;
FIG. 4(a) and FIG. 4(b) is a schematic diagram of a data transmission scenario according to an embodiment of this application;
FIG. 5 is a schematic diagram of a structure of an electronic device according to an embodiment of this application;
FIG. 6 is a schematic diagram of a system architecture according to an embodiment of this application;
FIG. 7A is a flowchart of a data transmission method according to an embodiment of this application;
FIG. 7B is a flowchart of another data transmission method according to an embodiment of this application;
FIG. 8(a), FIG. 8(b), and FIG. 8(c) is a schematic diagram of an interface according to an embodiment of this application;
FIG. 9(a), FIG. 9(b), FIG. 9(c) and FIG. 9(d) is a schematic diagram of another interface according to an embodiment of this application;
FIG. 10(a), FIG. 10(b), FIG. 10(c) and FIG. 10(d) is a schematic diagram of still another interface according to an embodiment of this application;
FIG. 11 is a schematic diagram of another interface according to an embodiment of this application;
FIG. 12 is a schematic diagram of still another interface according to an embodiment of this application; and
FIG. 13 is a schematic diagram of a structure of an electronic device according to an embodiment of this application.

### DESCRIPTION OF EMBODIMENTS

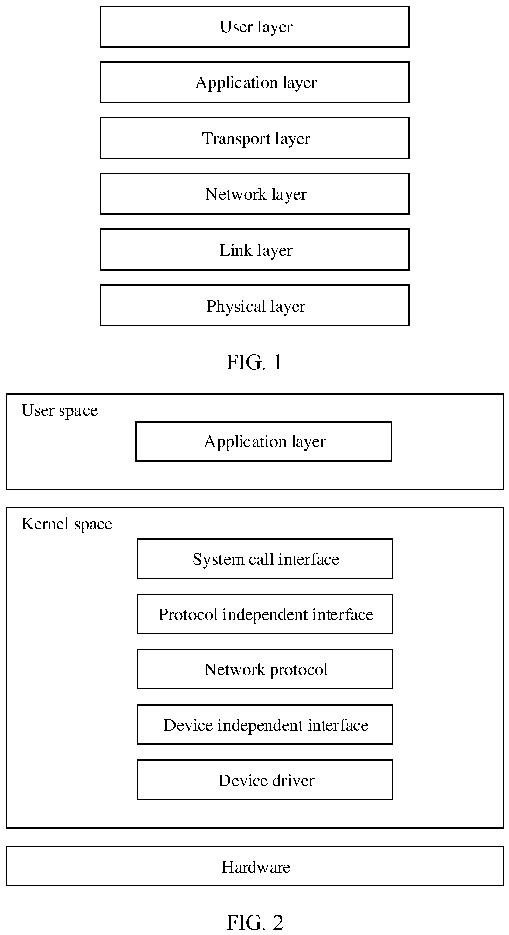

For ease of understanding embodiments of this application, some concepts related to embodiments of this application are described as examples for reference. Details are as follows: A network stack can define a structure of a network and a division of functions of each layer. FIG. 1 is a schematic diagram of a basic structure of a network stack. As shown in FIG. 1, the network stack may generally include a physical layer, a link layer, a network layer, a transport layer, an application layer, a user layer, and the like. The physical layer may be various media, such as a wireless Wi-Fi network, a serial link, or an Ethernet device, and a bit stream is transmitted by using a physical medium, to finally implement signal transmission. The link layer is a device driver that provides access to the physical layer. The link layer may include a logical link control sublayer and a media access control sublayer. The link layer combines bits into bytes, and then combines the bytes into frames. The link layer uses a link layer address (for example, a MAC address is used in an Ethernet) to access the physical medium and performs an error detection. The network layer is responsible for directing a data packet to a destination, that is, establishing a connection between two nodes through IP addressing, selecting a proper routing and switching node for a packet from a sending-end electronic device, and transmitting the packet to a receiving-end electronic device based on an IP address. The network layer is an IP protocol layer. An IP protocol is the basis of Internet. The transport layer is responsible for point-to-point communication between electronic devices, for example, managing communication between endpoints on electronic devices, that is, communication between port numbers of hosts, for example, ssh 127.0.0.1 in a host. The transport layer provides a reliable and transparent point-to-point data transmission service for an upper-layer protocol, including handling problems of error control and flow control. The transport layer shields details of lower-layer data communication from an upper layer. In this way, an upper layer user sees only a reliable host-to-host data path between two transport entities, which is controlled and set by the user. TCP and UDP are usually used at the transport layer. The application layer may be understood as a semantic layer of transmitted data. Common network service protocols at the application layer include HTTP, HTTPS, FTP, POP3, and the like. The application layer is closest to the user. It directly provides an application interface and various network services for the user.

An operating system is a set of system software that manages a computer hardware resource, controls an operation of another program, and provides the user with an interactive operation interface. FIG. 2 is a schematic diagram of an operating system architecture. For example, the operating system may be a Linux system, an Android system, a UNIX system, or the like. As shown in FIG. 2, the system architecture generally includes user space, kernel space, hardware, and the like. An application program runs in the user space, and the user space is usually processed at a lower CPU permission level. The user space may include the foregoing application layer, and the application layer may include a plurality of application programs. A driver runs in the kernel space, and the kernel space is usually processed at a higher CPU permission level. Operating system code may be isolated from application program code by distinguishing the kernel space from the user space, and even if an error occurs in a single application program, stability of the operating system is not affected. That is, distinguishing the kernel space from the user space can improve stability and availability of the operating system.

In some embodiments, the kernel space may include a system call interface, a protocol independent interface, a network protocol, a device independent interface, a device driver, and the like. Through the system call interface, data may be copied to the kernel space or copied from the kernel space to the user space. The protocol independent interface may be a socket layer, and is configured to provide a group of general functions to support various protocols, such as the TCP protocol, the UDP protocol, or the IP protocol. The network protocol defines a specific network protocol that can be used, for example, the TCP protocol or the UDP protocol. The device independent protocol may connect the network protocol to drivers of various hardware devices with different functions, and is used to provide a set of common functions. The device independent protocol is used by a driver of a network device driver at a lower level, so that the driver of the network device may operate by using a protocol stack at a higher level. The device driver is used to manage the network device. For example, the device driver may include an SLIP driver on a serial interface or an Ethernet driver on an Ethernet device.

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" means "two or more".

The terms "first" and "second" mentioned below are merely intended for a purpose of description, and shall not be understood as an indication or implication of relative importance or implicit indication of the number of indicated technical features. Therefore, a feature defined with "first" or "second" may explicitly or implicitly include one or more features. In descriptions of embodiments, unless otherwise specified, "a plurality of" means two or more.

With an increasing demand for interconnection between electronic devices, such as sharing of a file between electronic devices, or projection or sound projection by an electronic device to another electronic device, people have an increasing requirement for a file transmission capability of the electronic device.

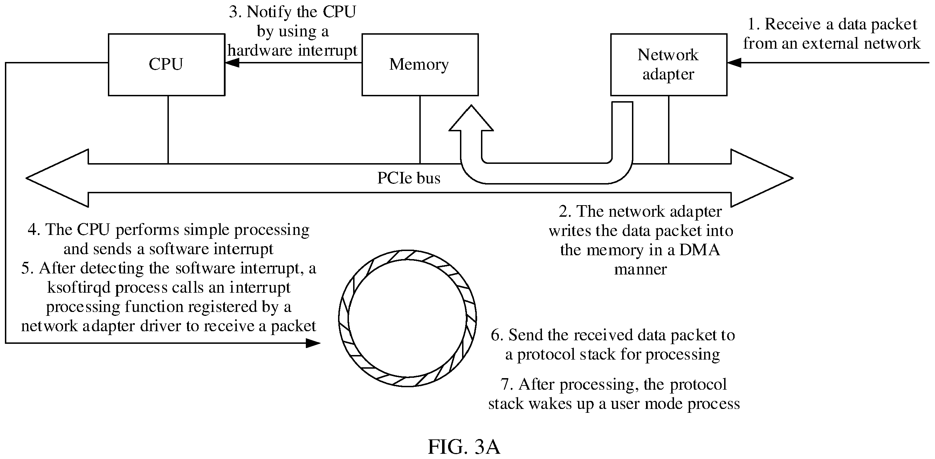

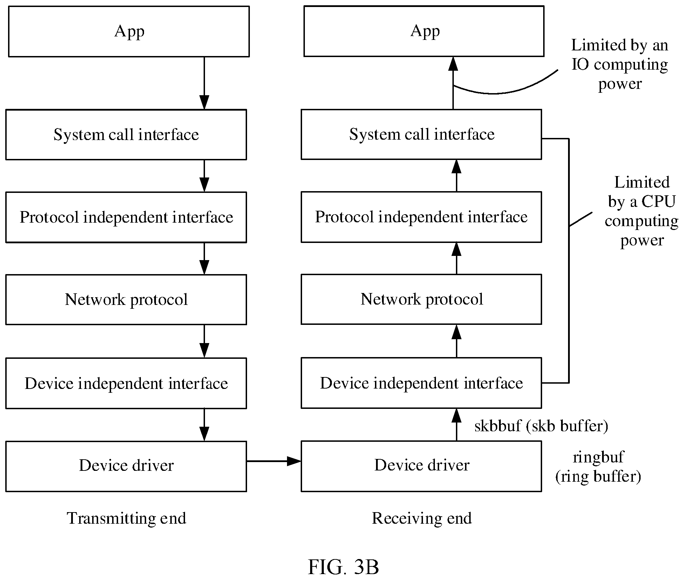

At present, when receiving file data in a kernel and transferring the file data to an application, a receiving-end electronic device needs to copy the file data a plurality of times, which may cause a performance problem. As shown in FIG. 3A and FIG. 3B, a Linux system is used as an example. In a process of transmitting a file by an electronic device, when a receiving-end electronic device receives file data, a network adapter first receives the file data from an external network, then the network adapter writes the file data into a memory in a DMA manner, and then a hardware interrupt is initiated to a CPU, to notify the CPU that data arrives. In this way, the CPU may call, in response to the hardware interrupt, an interrupt processing function registered by a network adapter driver for simple processing, and then send a software interrupt. After a ksoftirqd process detects the software interrupt, a poll function can be called to receive packets and the received file data is sent to a kernel protocol stack for processing. When receiving the file data in the kernel and transferring the file data to an application, the receiving-end electronic device needs to copy the file data a plurality of times. For example, the file data may be copied from a ring buffer (ringbuf) to an skb buffer (skbbuf), and then the file data is transferred from the skbbuf to the kernel protocol stack for processing. After processing the file data, the kernel protocol stack wakes up a user mode process, so that the user mode process receives the file data from a kernel mode process. That is, the file data is copied from kernel space to application space, so that an application layer receives the file data. In the process of receiving the file data by the receiving-end electronic device, the file data needs to be copied a plurality of times. Copying the file data a plurality of times requires a relatively high CPU computing power and IO capability. In a case of high throughput data receiving, higher CPU computing power and IO capability are required, and the receiving-end electronic device may have a performance problem when receiving the file.

In addition, in the foregoing process of receiving data by the receiving-end electronic device, service data corresponding to an important application (APP) and service data of a common app are received together in the kernel protocol stack for processing. That is, a plurality of pieces of service data received by the receiving-end electronic device are scheduled in a polling manner in a same kernel. Therefore, the service data of the important app, that is, a higher-priority service, cannot be quickly distinguished and processed by using the foregoing method.

For the foregoing problem, embodiments of this application provide a data transmission method. The receiving-end electronic device may transparently transmit data from a driver to a corresponding app for processing, to reduce a quantity of times of copying the data and improve a data transmission rate.

In addition, in the data transmission method provided in embodiments of this application, the service data of the important app (that is, a high-priority service) may be directly and transparently transmitted from the driver to the corresponding app, and the service data of the common app may be processed by using the kernel protocol stack according to a conventional technology. In this way, the high-priority service can be quickly distinguished, and the high-priority service can be preferentially processed, thereby reducing a response delay of the high-priority service.

The data transmission method provided in embodiments of this application may be applied to a plurality of scenarios such as file transmission (for example, image transmission, audio transmission, or video transmission), mirroring projection (for example, projection of a mobile phone to a computer or a television), multi-screen collaboration (for example, a multi-screen system between a mobile phone screen and a computer screen), or control information transmission between distributed systems, to improve the data transmission rate.

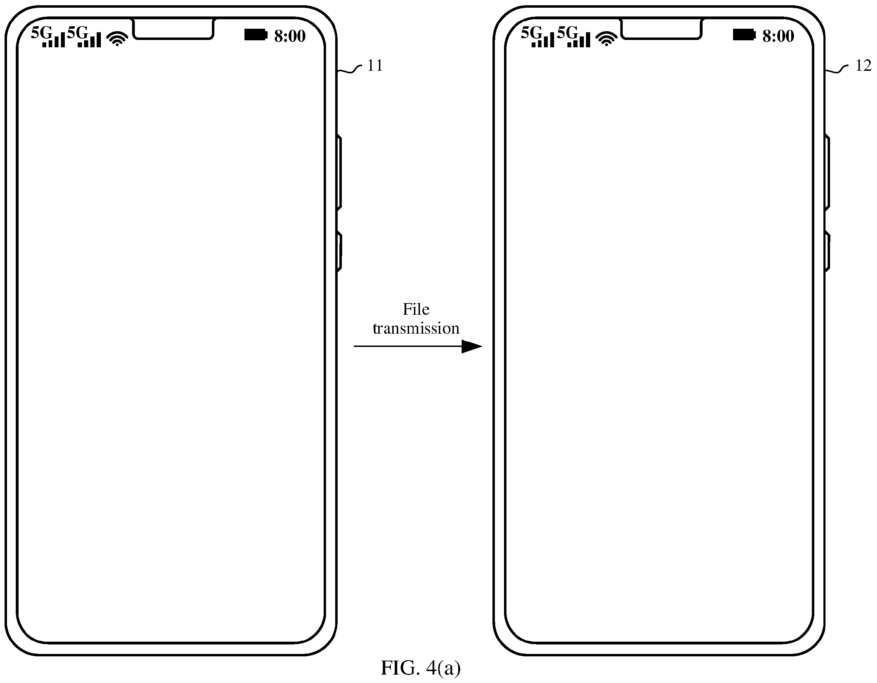

For example, as shown in FIG. 4(a), the data transmission method may be applied to a file transmission scenario. The file transmission scenario may include a first electronic device 11, a second electronic device 12, and the like. The first electronic device 11 is a sending-end electronic device, and is a sender of file transmission. The second electronic device 12 is a receiving-end electronic device, and is a receiver of the file transmission. The first electronic device 11 may transmit a file, for example, a text, an image, or audio and video, to the second electronic device 12 in any communication manner of 2G/3G/4G/5G, a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology.

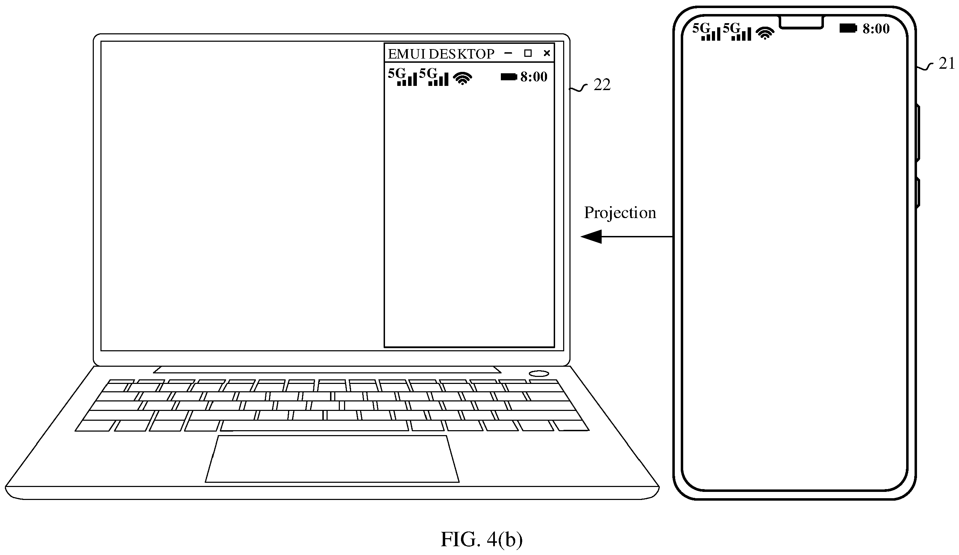

For another example, as shown in FIG. 4(b), the data transmission method may be applied to a projection scenario. The projection scenario may include a third electronic device 21 and a fourth electronic device 22. The third electronic device 21 may be a projection initiator, and the fourth electronic device 22 may be used as a projection receiver. That is, the third electronic device 21 projects content displayed on a screen to a screen of the fourth electronic device 22. The third electronic device 21 may project the screen to the fourth electronic device 22 in any communication manner of 2G/3G/4G/5G, a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology.

The first electronic device, the second electronic device, the third electronic device, and the fourth electronic device may be any electronic device that can perform data transmission, such as a mobile phone, a tablet computer, a wearable device (for example, a smartwatch), a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA).

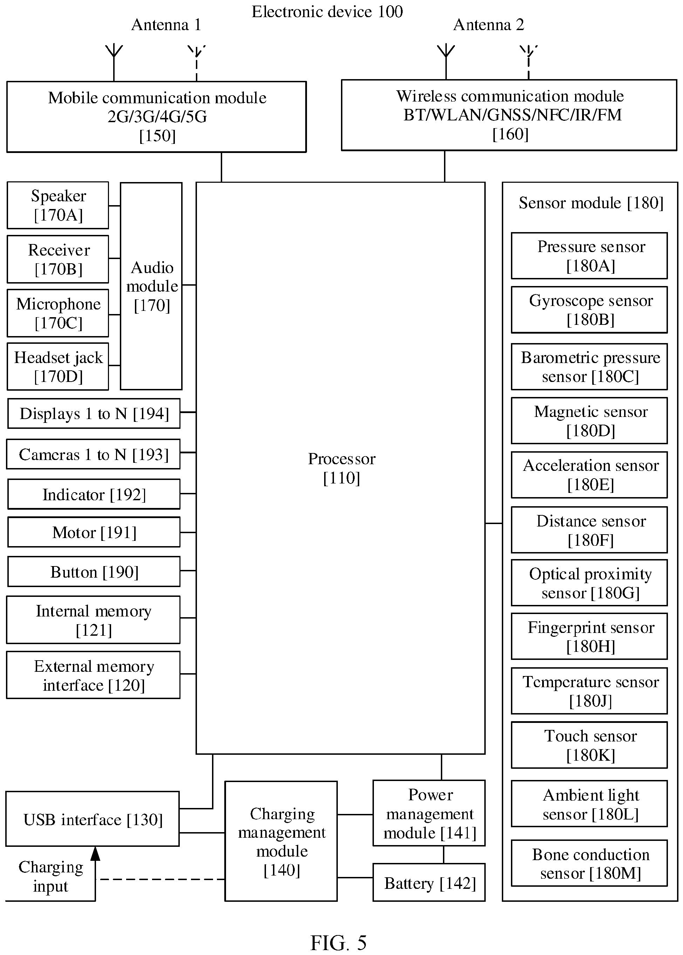

For example, FIG. 5 is a schematic diagram of a structure of an electronic device 100. The electronic device 100 may be the receiving-end electronic device or the sending-end electronic device, or may be the projection initiator or the projection receiver.

As shown in FIG. 5, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, and a camera 193, a display 194, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a central processing unit (central processing unit, CPU), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a solution applied to the electronic device 100 for wireless communication such as 2G/3G/4G/5G.

The wireless communication module 160 may provide a wireless communication solution that is applied to the electronic device 100, and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

The electronic device 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function by using the ISP, the camera 193, the video codec, the GPU, the display 194, the application processor, and the like.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and an address book) and the like that are created during use of the electronic device 100. In addition, the internal memory 121 may include a high-speed random access memory, or may include a non-volatile memory, for example, at least one magnetic disk storage device, a flash memory, or a universal flash storage (universal flash storage, UFS), and the like.

In this embodiment of this application, the processor 110 may complete data transmission by running the instructions stored in the internal memory 121.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device 100 at a position different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

It may be understood that, the structure illustrated in this embodiment of this application constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented in hardware, software, or a combination of software and hardware.

In some embodiments, the first electronic device may alternatively be a device such as a server. For example, if the first electronic device is a server corresponding to a browser, when the second electronic device opens the browser to perform searching, the server corresponding to the browser may send data corresponding to the search content to the second electronic device based on the search content. That is, the server corresponding to the browser sends the data to the second electronic device.

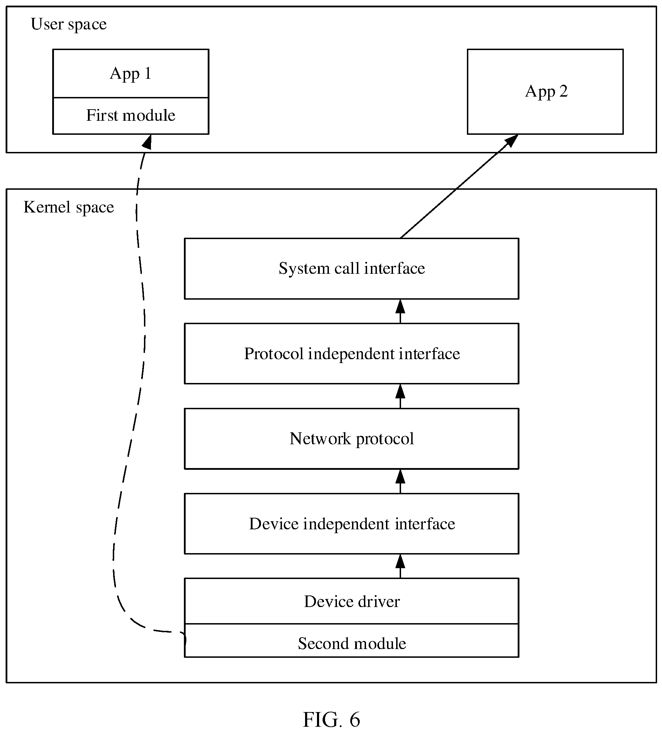

FIG. 6 is a schematic diagram of an operating system architecture according to an embodiment of this application. The operating system is generally applied to an electronic device. As shown in FIG. 6, in this embodiment of this application, the user space may include at least one first app (for example, an app 1) and at least one second app (for example, an app 2). The first app may be considered as an important app, that is, an app with a relatively high priority. The app with a relatively high priority may be an app having a relatively high real-time requirement, an app having a relatively large data throughput, an app having relatively high use frequency, or the like. For example, a skilled person may set a level of a live broadcast app to a relatively high priority in advance. The second app may be considered as a common app, that is, an app with a relatively low priority. The first app and the second app may be preset by the skilled person.

In some embodiments, for the first app, the skilled person may preset the first module in the first app, and preset the second module in the driver. The first module may directly receive the service data transparently transmitted from the second module. The first module may also be referred to as a specific receiving module, a distributed receiving module, or the like, and the second module may also be referred to as a distribution module, a distributed local distribution module, or the like. Names of the first module and the second module are not limited in this embodiment of this application. In this way, after receiving the service data, the driver may directly copy the service data that meets a preset condition from the second module to the corresponding first module, thereby reducing the quantity of times of copying the service data. Because the service data is directly copied from the second module of the driver to the first module of the corresponding first app without being processed by the kernel protocol stack, it may also be considered that the electronic device transparently transmits the service data from the driver to the corresponding first app. In addition, the service data of the first app may be transparently transmitted from the driver to the first app, and polling scheduling does not need to be performed in the kernel protocol stack together with the service data of the second app. In conclusion, in this solution, the first module and the second module are disposed, so that CPU and IO consumption can be reduced, performance of receiving data by the electronic device can be improved, and a data transmission rate can be increased.

In this embodiment of this application, a corresponding first module may be set for each first app, or a "public" first module may be set for all first apps. In some embodiments, a first module shown in FIG. 6 may be disposed in each first app in the receiving-end electronic device. In some other embodiments, only one "public" first module may be disposed in the receiving-end electronic device, each first app may call an interface to receive corresponding service data from the first module, and the first module does not need to be disposed in each first app.

In some other embodiments, the second app may not be disposed with the first module. In this way, the service data corresponding to the second app may be transmitted to the corresponding second app for processing by using the kernel protocol stack according to a conventional technology.

In this way, when receiving data from different apps, the receiving-end electronic device may directly and transparently transmit the data of the first app from the driver to the corresponding app for processing. Because the first module is not disposed in the second app, the second app still transmits the data to the corresponding app for processing by using the kernel protocol stack according to a conventional technology, so that the data of the first app, that is, the app with a higher priority, can be quickly processed.

For example, the receiving-end electronic device receives data by using the antenna 1 or the antenna 2, and then temporarily stores the data in the memory. If the processor 110 determines that the data meets the preset condition, the processor 110 may directly transfer the data from the second module set in the driver to the first module set in the corresponding app, to perform subsequent processing on the data.

In the following embodiment of this application, in the file transmission scenario shown in FIG. 4(a), an example in which the sending-end electronic device is a mobile phone having the structure shown in FIG. 5, and the receiving-end electronic device is a mobile phone having the structure shown in FIG. 5 and having the operating system architecture shown in FIG. 6 is used to describe in detail the data transmission method provided in this embodiment of this application with reference to the accompanying drawings.

It should be noted that, as shown in FIG. 3B, because a data receiving rate of the receiving-end electronic device is mainly affected by a CPU computing power and an IO capability, when a data volume is increasing, a main reason why the transmission rate is relatively low is that the receiving - end electronic device cannot process data in a timely manner, and the sending-end electronic device has relatively little impact on the transmission rate. Therefore, the following embodiments are mainly aimed at improving the receiving-end electronic device.

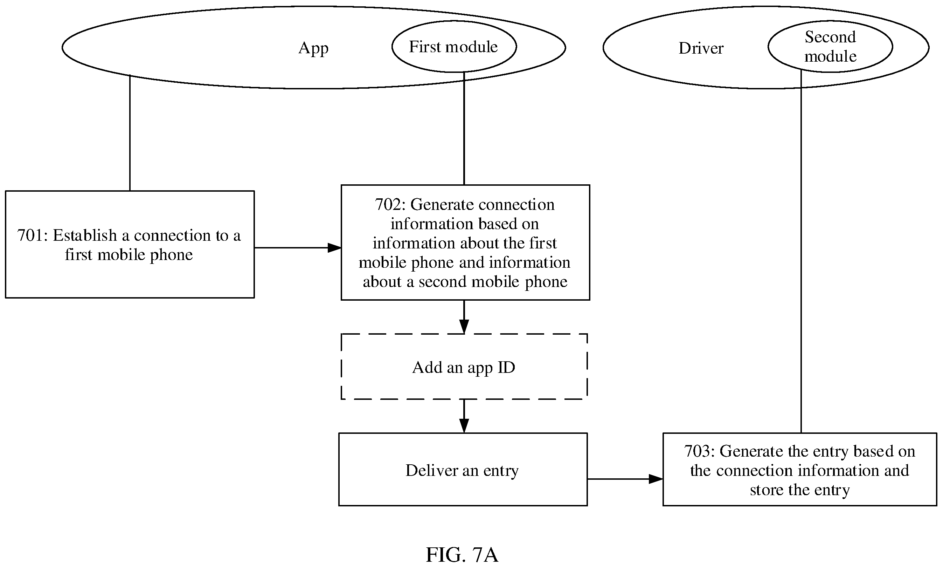

For example, the data transmission method provided in this embodiment of this application may include an entry generation process and a data transmission process. The receiving-end electronic device may transparently transmit, based on an entry stored in the entry generation process, data that meets a condition from the driver to the corresponding application in the data transmission process. As shown in FIG. 7A, the entry generation process may include the following steps.

701: The first mobile phone establishes a connection to the second mobile phone.

The first mobile phone is the sending-end electronic device, that is, a source device, and the second mobile phone is the receiving-end electronic device, that is, a destination device.

The first mobile phone and the second mobile phone may establish a connection by sending a request message. The request message may be sent by the first mobile phone to the second mobile phone, or may be sent by the second mobile phone to the first mobile phone. The request message may include information about a sender of the request message, for example, information such as an identifier, an IP address, and a port number of the sender. For example, if the request message is sent by the first mobile phone to the second mobile phone, the request message may include information such as an identifier, an IP address, and a port number of the first mobile phone; or if the request message is sent by the second mobile phone to the first mobile phone, the request message may include information such as an identifier, an IP address, and a port number of the second mobile phone. A process of establishing a connection by using a request message usually includes a process of discovering a surrounding electronic device, a plaintext connection, authentication (by using a PIN code, scanning, or the like), an encrypted connection, and the like.

The request message may be sent in any one of communication manners such as 2G/3G/4G/5G, WLAN, Wi-Fi, Bluetooth, GNSS, FM, NFC, or IR. In other words, when the first mobile phone and the second mobile phone are relatively close or far away from each other, the first mobile phone and the second mobile phone may establish a connection for communication by sending the request message.

For example, the first mobile phone sends the request message to the second mobile phone. The first mobile phone may send the request message to the second mobile phone by using different trigger conditions.

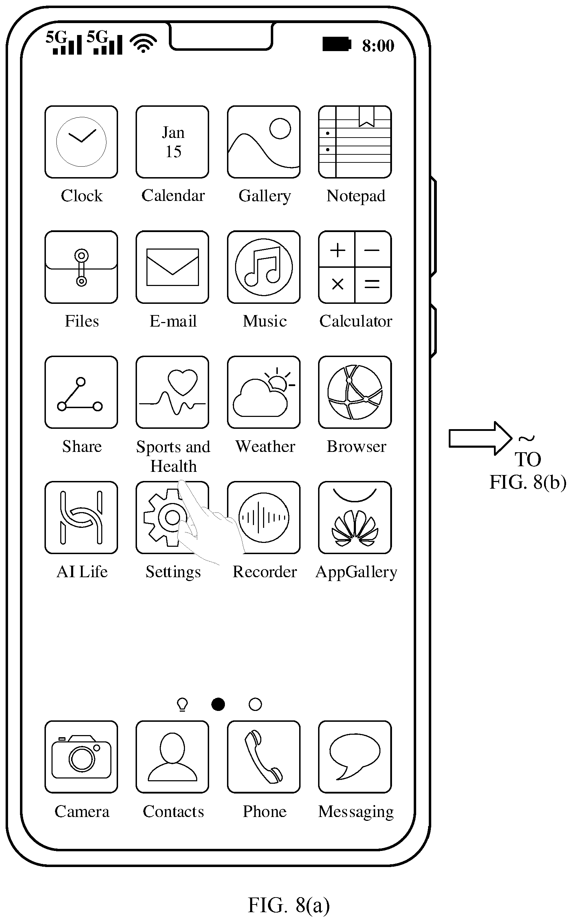

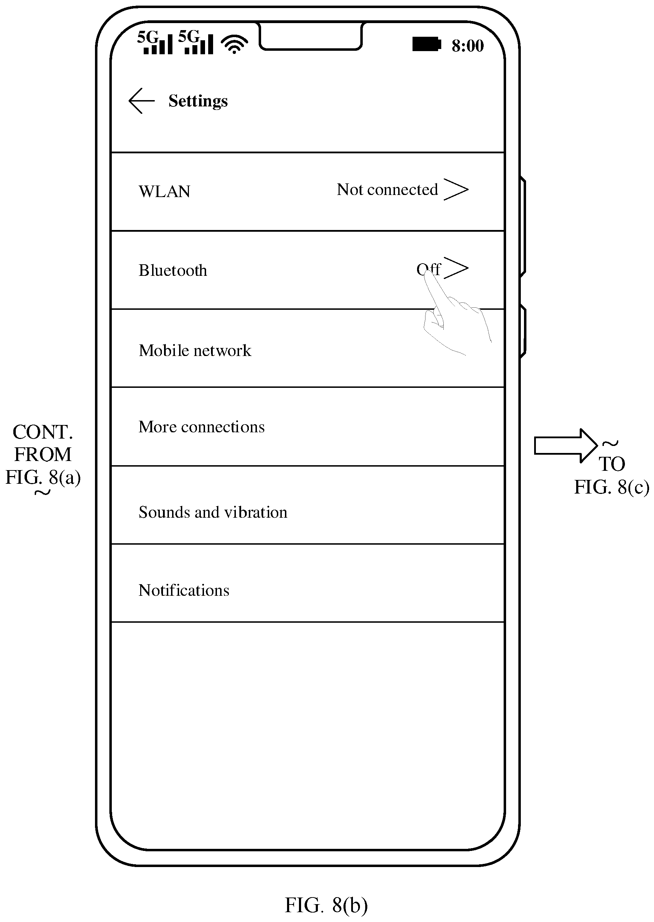

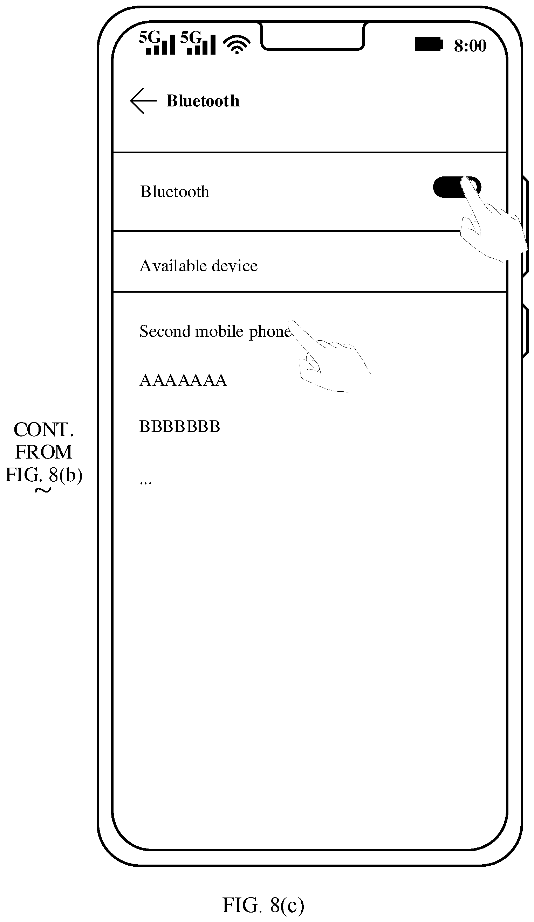

For example, the user may enable, by using system setting, the first mobile phone to send the request message to the second mobile phone. As shown in FIG. 8(a), the first mobile phone may enable "settings" in the system in response to an operation of the user. In a setting interface shown in FIG. 8(b), the user may select "Bluetooth", to enable Bluetooth in the interface shown in FIG. 8(c), and select an identifier of the second mobile phone. In this case, the first mobile phone may send the request message to the second mobile phone. Certainly, the user may alternatively enable another connection manner such as "WLAN" on the setting interface, so that the first mobile phone sends the request message to the second mobile phone. This is not limited in this embodiment of this application.

For another example, the user may further start a first application in the first mobile phone, so that the first mobile phone sends the request message to the second mobile phone. The first application may be a third-party application or a system application that has a file transmission capability. This is not limited in this embodiment of this application. The following uses an example in which the first application is a share application for specific description.

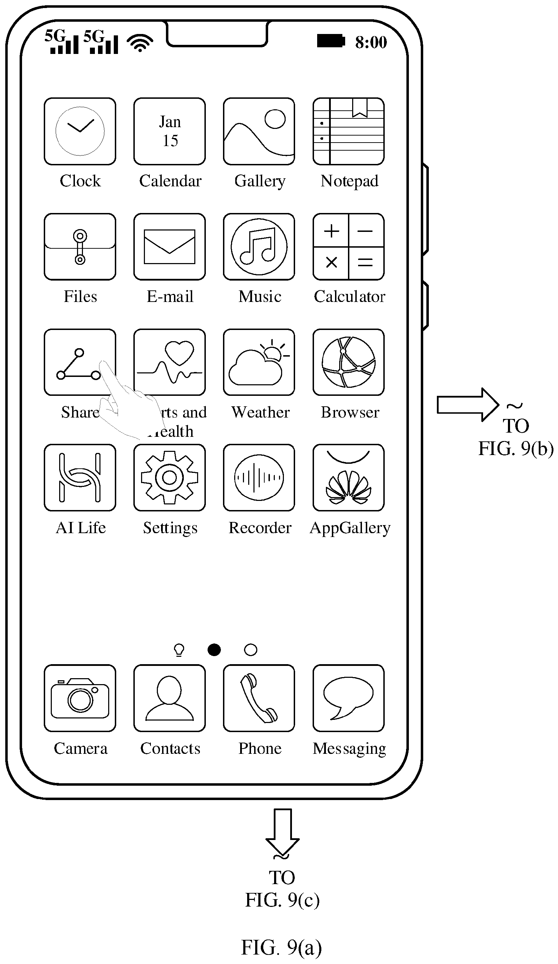

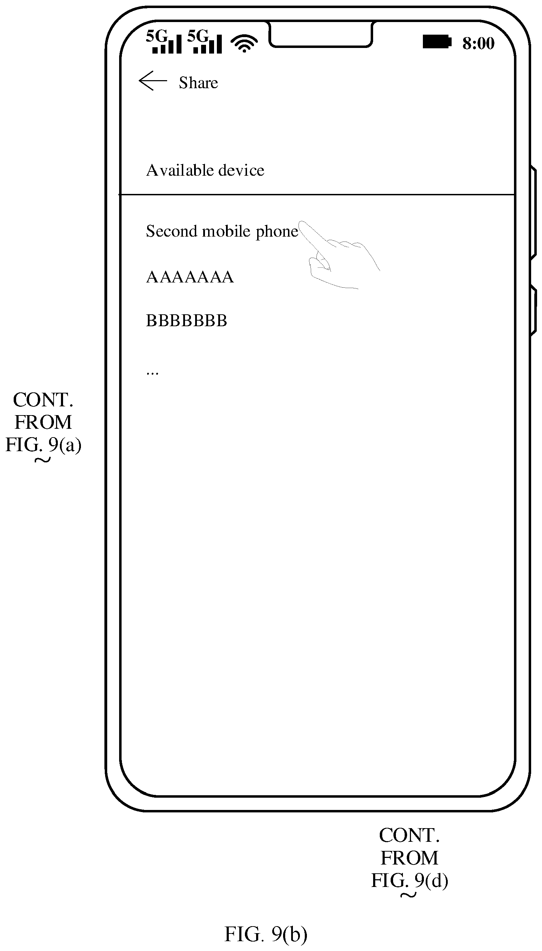

In some embodiments, the first mobile phone may start the share application in response to an operation of opening the share application by the user. As shown in FIG. 9(a), the user may tap an icon of the share application, so that the first mobile phone starts the share application, and displays a selection interface shown in FIG. 9(b). The selection interface may include identifiers of a plurality of electronic devices. The user may select the identifier of the second mobile phone on the selection interface, and the first mobile phone may send the request message to the second mobile phone in response to a selection operation of the user. Certainly, the operation of starting the share application by the user may alternatively be a double-tap operation, a voice operation, a gesture operation, or the like, and the selection operation of the user may be a tap operation, a voice operation, a gesture operation, or the like. This is not limited in this embodiment of this application.

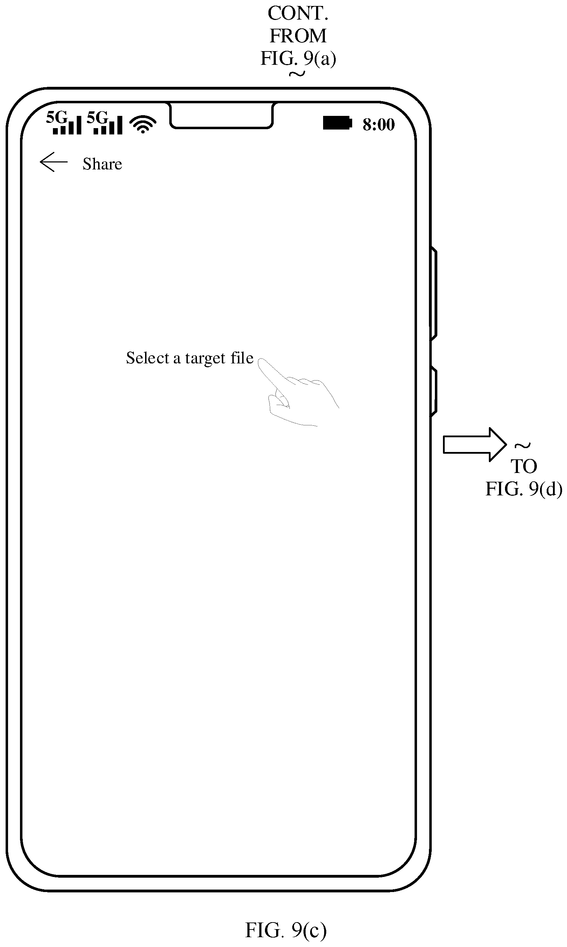

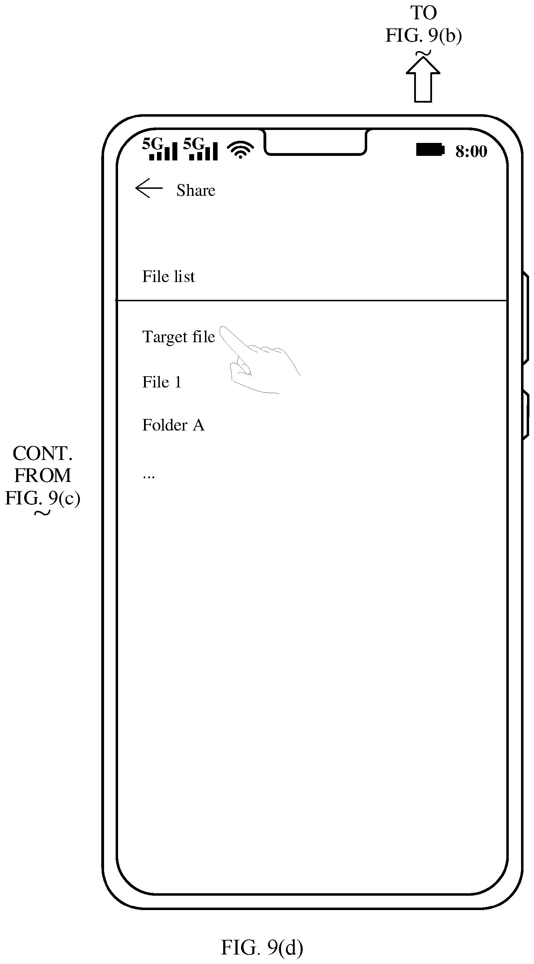

In some other embodiments, after the first mobile phone starts the share application, as shown in FIG. 9(c), a control for "selecting a target file" may be first displayed. After the user selects the control, the first mobile phone may display a file list shown in FIG. 9(d), and the user may select a target file that is expected to be transmitted to the second mobile phone by using the first mobile phone. In this way, the first mobile phone may display the selection interface shown in FIG. 9(b), and send the request message to the second mobile phone in response to a selection operation performed by the user on the identifier of the second mobile phone. In this case, the request message may further carry information about the target file.

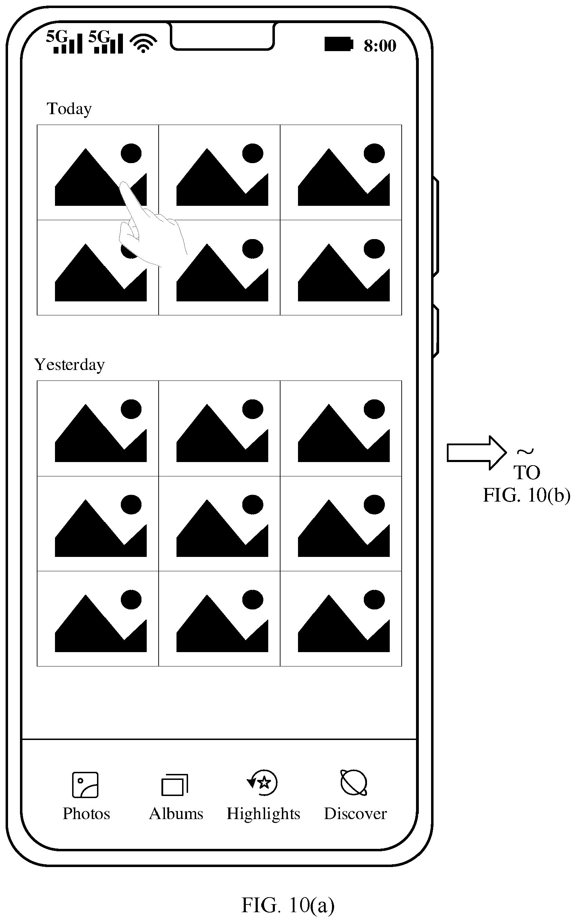

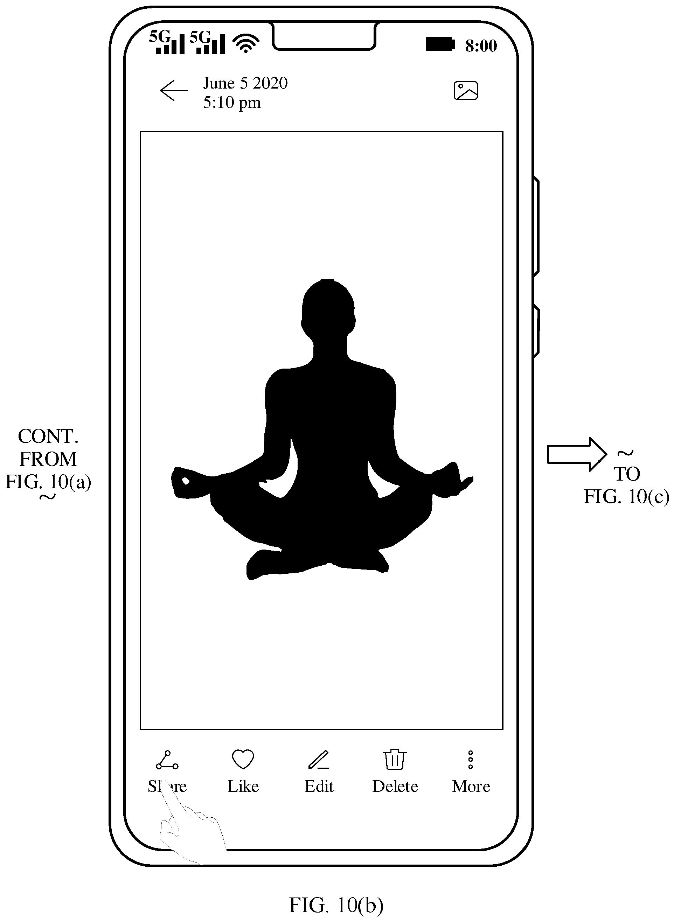

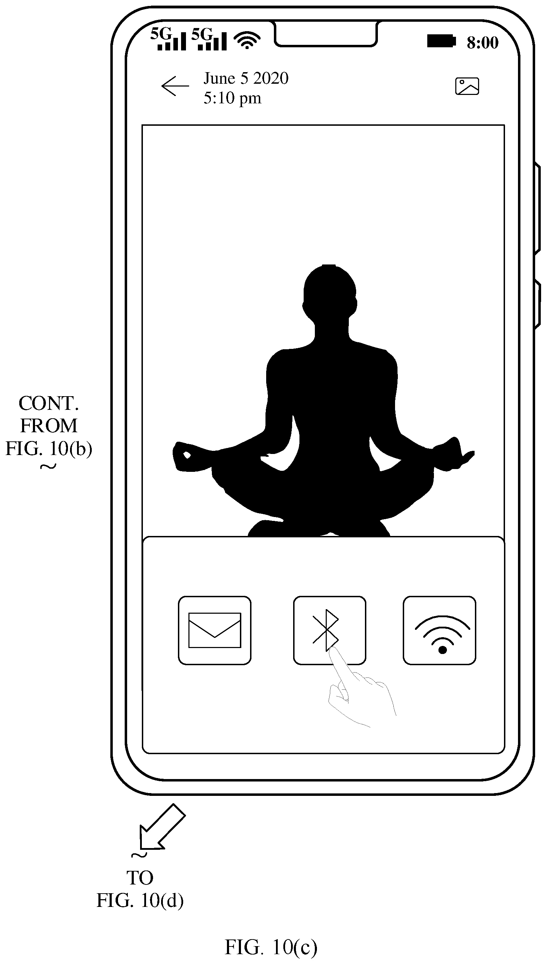

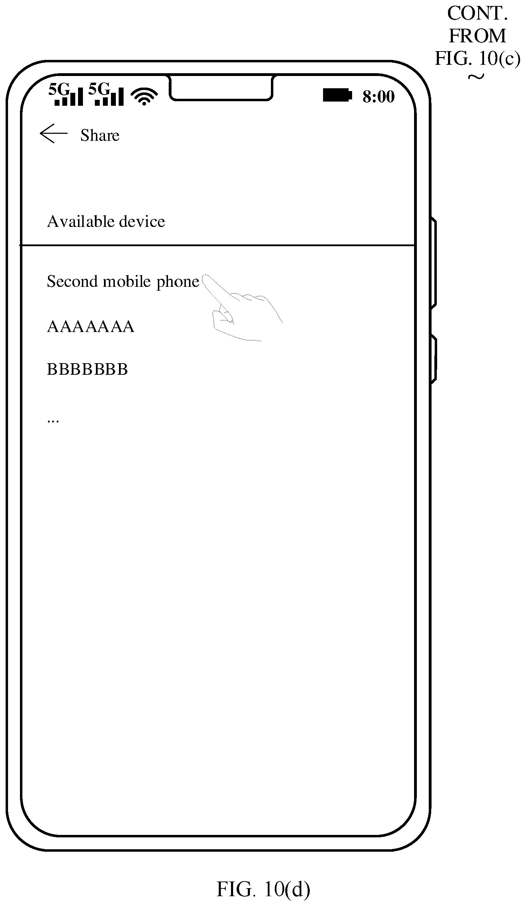

In some other embodiments, when opening the target file, the first mobile phone may trigger the first mobile phone to start the share application, so that the first mobile phone is enabled to send the request message to the second mobile phone. As shown in FIG. 10(a) and FIG. 10(b), the first mobile phone may display a share icon after opening a target picture in a gallery, to display icons of a plurality of share applications shown in FIG. 10(c). The user may select a share application to start the share application. After starting the share application, the first mobile phone may display a selection interface shown in FIG. 10(d). The selection interface is the same as the selection interface shown in FIG. 9(b), and may include identifiers of a plurality of electronic devices. The user may select the identifier of the second mobile phone from the identifiers, and the first mobile phone may send the request message to the second mobile phone in response to the selection operation of the user. Similarly, the request message may also carry the target file, that is, information about the target picture.

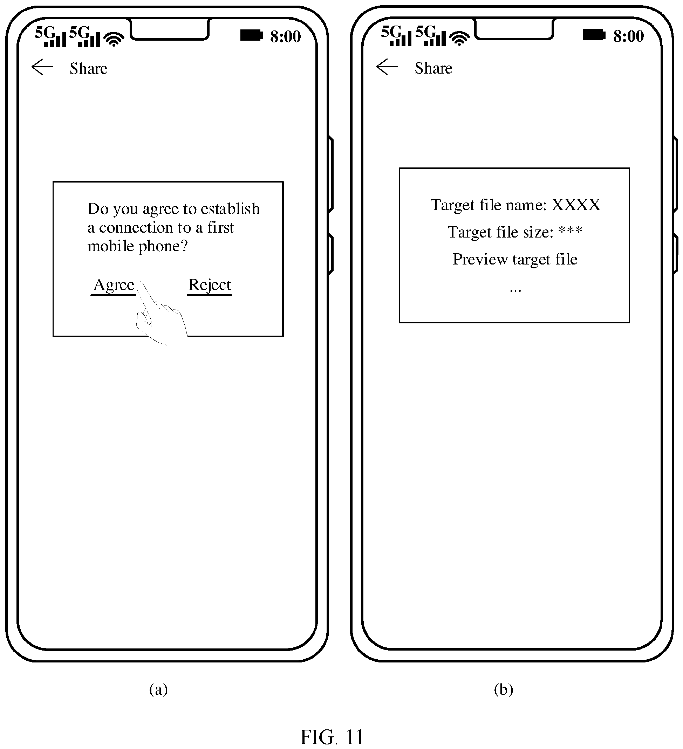

After receiving the request message, the second mobile phone may directly establish a connection to the first mobile phone. Alternatively, after receiving the request message, the second mobile phone may establish a connection to the first mobile phone based on an instruction of the user. For example, after receiving the request message, the second mobile phone may display a first pop-up box shown in (a) in FIG. 11, and inquiry the user whether to agree to establish a connection to the first mobile phone. After the user selects an "Agree" control, the first mobile phone establishes the connection to the second mobile phone. For another example, when the request message carries the information about the target file, the second mobile phone may further display a second pop-up box shown in (b) in FIG. 11, and the second pop-up box may display the information about the target file included in the request message for the user to view.

In this embodiment of this application, receiving the request message by the second mobile phone may be considered as receiving the request message by the share app in the second mobile phone. The share app in the second mobile phone is an app that can subsequently receive data from the first mobile phone. In other words, establishing the connection to the second mobile phone by the first mobile phone may be considered as establishing a data transmission connection to the share app in the second mobile phone by the first mobile phone, and the data transmission connection is used to transmit service data of the share app.

In some embodiments, the second mobile phone may further prompt, in a form of a pop-up window, a voice, or the like, the user that the first mobile phone has established a connection to the second mobile phone. This is not limited in this embodiment of this application. In some other embodiments, a corresponding app in the second mobile phone may send a response message to the first mobile phone, to indicate the second mobile phone to establish a connection to the first mobile phone.

In addition, when the second mobile phone sends the request message to the first mobile phone, the first mobile phone may send the response message to the second mobile phone after receiving the request message of the second mobile phone, so that the first mobile phone is enabled to establish a connection to the second mobile phone. The second mobile phone generally sends the request message to the first mobile phone after the share app is started. Therefore, establishing a connection to the second mobile phone by the first mobile phone may be considered as establishing a connection to the share app in the second mobile phone by the share app in the first mobile phone. The response message may include information about the first mobile phone. In this way, the second mobile phone may obtain the information about the first mobile phone by using the response message.

In some embodiments, if the sending-end electronic device is a server, that is, when the second mobile phone receives data from the server, the second mobile phone may also obtain information about the server by using a response message from the server.

For example, when the second mobile phone starts a browser, the second mobile phone may send a request message to a server corresponding to the browser, and the server may send a response message to the second mobile phone. The response message includes information such as an IP address and a port number of the server, so that the second mobile phone establishes a connection to the server.

It may be understood that, when the second mobile phone establishes the connection to a specific server, once the connection is established, data sent by the specific server to the second mobile phone is received by an application corresponding to the specific server. It may also be considered that the specific server establishes a connection to a corresponding application on the second mobile phone. For example, after the second mobile phone establishes the connection to the server corresponding to the browser, the data sent by the server corresponding to the browser to the second mobile phone is directly received by a browser app in the second mobile phone.

702: An application of the second mobile phone generates data transmission connection information based on the connection information of the first mobile phone and the connection information of the second mobile phone.

In this embodiment of this application, after the first mobile phone establishes the connection to the second mobile phone, the first module (that is, the distributed receiving module) disposed in the application of the second mobile phone may generate the data transmission connection information based on the connection information of the first mobile phone and the connection information of the second mobile phone.

For example, after receiving the request message or the response message from the first mobile phone, the share app in the second mobile phone may obtain the connection information of the first mobile phone from the request message or the response message, for example, information such as an IP address, a port number, a protocol number, and an interface identifier of the first mobile phone. The protocol number usually indicates a transport layer protocol. For example, a protocol number 6 indicates the TCP protocol, and a protocol number 17 indicates the UDP protocol. In some other embodiments, the protocol number may also indicate a network layer protocol and an application layer protocol. In addition, the second mobile phone may further obtain the connection information of the second mobile phone. For example, the second mobile phone may obtain information such as an IP address, a port number, or an interface identifier of the second mobile phone from a storage. Further, the first module disposed in the share app of the second mobile phone may generate the data transmission connection information based on the connection information of the first mobile phone and the connection information of the second mobile phone. The data transmission connection information is used to generate an entry. In some embodiments, the data transmission connection information may be considered as connection identification information in the entry. For example, the data transmission connection information may include the IP address of the first mobile phone, the port number of the first mobile phone, the IP address of the second mobile phone, the port number and the protocol number of the second mobile phone, and the like. Herein, the IP address of the first mobile phone may be referred to as a source address, the port number of the first mobile phone may be referred to as a source port number, the IP address of the second mobile phone may be referred to as a destination address, and the port number of the second mobile phone may be referred to as a destination port number. In this case, the data transmission connection information is 5-tuple information.

703: The driver of the second mobile phone generates an entry based on the data transmission connection information, and stores the entry.

After the data transmission connection information is generated, the driver of the second mobile phone may generate the entry based on the data transmission connection information, and store the generated entry in the driver.

In some embodiments, the first module (that is, the distributed receiving module) in the app that is in the second mobile phone and that receives the request message or the response message may add app identification information of the app to the data transmission connection information, and deliver the data transmission connection information to which the app identification information is added to the second module (that is, the distributed local distribution module) set in the driver of the second mobile phone. In this way, the second module of the second mobile phone generates an entry based on the data transmission connection information to which the app identification information is added, and stores the entry in the driver of the second mobile phone. The app identification information may indicate an app to which current data transmission belongs. In other words, the app identification information may indicate an app that is in the second mobile phone and that has established the data transmission connection to the first mobile phone, so that the second module of the second mobile phone subsequently transmits data to the first module in the corresponding app.

In some other embodiments, the first module in the app of the second mobile phone may add the app identification information when generating the data transmission connection information. That is, the connection information generated by the first module in the app of the second mobile phone includes the app identification information, and the second module in the driver of the second mobile phone may directly generate an entry based on the connection information, and store the entry in the driver.

The app identification information may include an app identification number (ID), an app package name, or the like.

The second mobile phone may generate an entry based on the foregoing step 701 to step 703. As shown in Table 1, the entry may include at least the connection identification information and the app identification information. The connection identification information indicates a data transmission connection established between the first mobile phone and an app in the second mobile phone. For example, the connection identification information may include a source address, a destination address, a source port number, a destination port number, a protocol number, and the like. After generating the entry, the second mobile phone may store the entry in the driver for subsequent data transmission.

**Table 1**

| Entry | Explanation |
|---|---|
| Source address | Indicates a source address of a data packet |
| Destination address | Indicates a destination address of a data packet |
| Source port number | Indicates a source port number of a data packet |
| Destination port number | Indicates a destination port number of a data packet |
| Protocol number | Indicates a protocol number used for a data packet, for example, TCP or UDP |
| App identification number (APP ID) | Indicates an app to which data transmission belongs, for example, Huawei share or projection |

It should be noted that the foregoing entry is merely an example, and does not constitute a limitation on entry content. The entry includes at least the connection identification information and the app identification information.

In some embodiments, the foregoing entry may further include more information. For example, a specified interface identifier may be further added to the foregoing entries including a source address, a destination address, a source port number, a destination port number, a protocol number, and an app ID. For example, an interface corresponds to a specific service, so that the service can be quickly processed. The data transmission rate can be further improved by adding the interface identifier to the entry.

For another example, the entry may further include a minimum time to live (time to live, TTL) value and a maximum TTL value. The minimum TTL value indicates an expected minimum value of the TTL, and the maximum TTL value indicates an expected maximum value of the TTL. In a direct connection scenario, the minimum TTL value is the same as the maximum TTL value. In a scenario in which the data transmission passes through a router, a difference between the maximum TTL value and the minimum TTL value is a quantity of routers that the data transmission passes through. A data transmission path can be traced by using the minimum TTL value and the maximum TTL value, to ensure data transmission security.

In some other embodiments, the connection identification information in the entry may be identification information in another form such as a specified interface identifier, 3 -tuple information, or 7-tuple information. In other words, the 5-tuple information (that is, the source address, the destination address, the source port number, the destination port number, and the protocol number) may be replaced with information in another form such as the specified interface identifier, the 3-tuple information, or the 7-tuple information.

After step 703, the first mobile phone may further send a message for requesting to start the data transmission to the second mobile phone. It should be noted that the first mobile phone may also send, after establishing the connection to the second mobile phone, the message for requesting to start the data transmission to the second mobile phone.

After receiving the message for requesting to start the data transmission, the second mobile phone may directly start to receive data without an instruction of the user, or may start to receive data in response to an instruction of the user. The data is generally the service data of the share app.

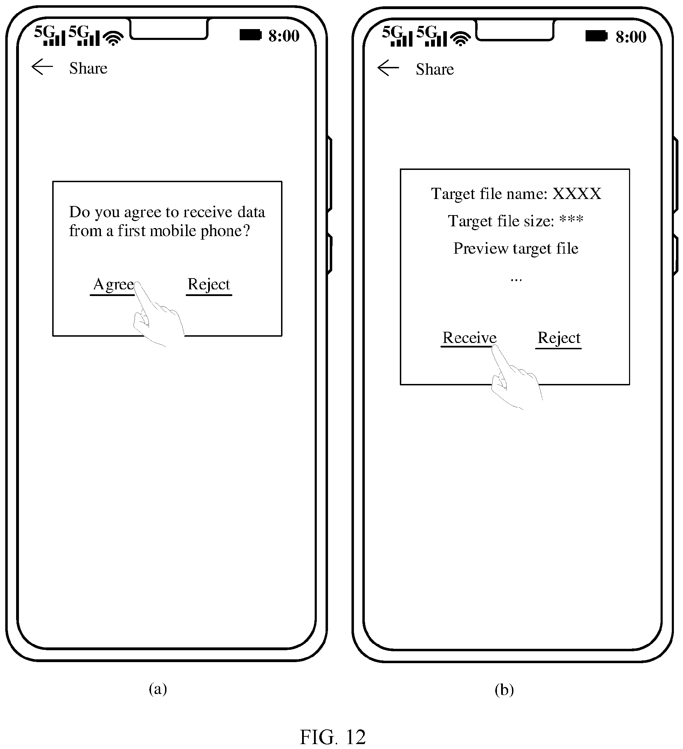

For example, as shown in (a) in FIG. 12, after the first mobile phone sends the message for requesting to start the data transmission to the second mobile phone, the second mobile phone may display a third pop-up box, to inquiry whether the user agrees to receive the data from the first mobile phone. If the user selects the "Agree" control, the first mobile phone starts to transmit data to the second mobile phone. That is, the second mobile phone starts to receive data in response to an instruction of the user.

For another example, as shown in (b) in FIG. 12, after the first mobile phone sends the request message to the second mobile phone, when the second mobile phone displays the information about the target file in the request message, a "Receive" control and a "Reject" control may be further displayed. If the user selects the "Receive" control, after the first mobile phone establishes the connection to the second mobile phone, the first mobile phone may directly start to transmit data to the second mobile phone. That is, the second mobile phone starts to receive data in response to an instruction of the user.

The foregoing is described by using an example in which the first mobile phone sends the message for requesting to start the data transmission to the second mobile phone. In some embodiments, after the first mobile phone establishes the connection to the second mobile phone, the second mobile phone may also send a data transmission request message to the first mobile phone. Herein, the message may carry an identifier of data content that the user of the second mobile phone expects to obtain, for example, a file name or the like. After receiving the message, the first mobile phone may transmit related data to the second mobile phone based on the file name.

In addition, in some embodiments, the foregoing entry generation process may not be required. The foregoing entry may be preset in the second mobile phone. In other words, a person skilled in the art may store the entry information in the second mobile phone in advance. In this way, the first mobile phone may directly send the message for requesting to start the data transmission to the second mobile phone, or the second mobile phone may directly send the message for requesting to transmit data to the first mobile phone. Alternatively, the first mobile phone may directly send to-be-transmitted data to the second mobile phone, without performing the foregoing entry generation process.

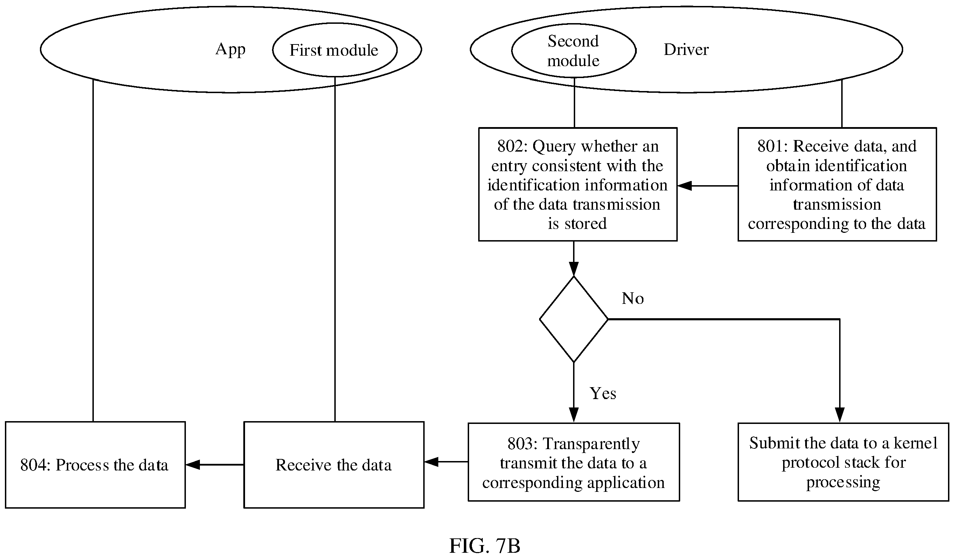

After the entry generation process, that is, after step 703, the first mobile phone may transmit data to the second mobile phone. Alternatively, when an entry is pre-stored in the second mobile phone, the first mobile phone may transmit data to the second mobile phone. The following specifically describes a data transmission process in an embodiment of this application with reference to FIG. 7B. As shown in FIG. 7B, a data transmission process may include the following steps.

801: The driver of the second mobile phone receives the data, and obtains the connection identification information of the data transmission corresponding to the data.

The connection identification information of the data transmission may be any one type of identification information in 5-tuple information, 7-tuple information, a specified interface identifier, 3-tuple information, or the like corresponding to the data.

When the first mobile phone transmits data to the second mobile phone, the second mobile phone may receive the data from the first mobile phone. For example, after the second mobile phone agrees to receive the data from the first mobile phone in response to an operation of the user, the first mobile phone may transmit the service data to the second mobile phone. Correspondingly, the second mobile phone may receive the service data from the first mobile phone. For example, data may be transmitted in a form of a data packet, and the data packet may include information such as the connection identification information and data content of the data transmission. For example, the identification information of the data transmission may be 5-tuple information (that is, a source address, a destination address, a source port number, a destination port number, and a protocol number).

In some embodiments, after receiving the data, a network interface card of the second mobile phone may transmit the data to the driver. The driver may parse the data, to obtain the connection identification information of the data transmission in the data, for example, obtain information such as a source address, a destination address, a source port number, a destination port number, a protocol number, and the like. That is, the driver may obtain 5-tuple information of the data. For another example, the driver of the second mobile phone may also obtain the specified interface identifier in the data. This is not limited in this embodiment of this application.

802: The driver of the second mobile phone queries whether an entry consistent with the connection identification information of the data transmission is stored.

It can be learned from the foregoing content that the driver of the second mobile phone may store an entry. It may be understood that the second mobile phone may store one or more entries. For example, if a plurality of data transmission connections have been established between the second mobile phone and another electronic device, the second mobile phone may store a plurality of entries related to the plurality of connections.

After the second mobile phone obtains the connection identification information of the data transmission corresponding to the data from the first mobile phone, the driver of the second mobile phone may query whether the entry consistent with the connection identification information of the data transmission is stored. That is, the driver of the second mobile phone may compare the connection identification information of the data transmission with the stored entries one by one. For example, the driver of the second mobile phone may compare the 5-tuple information of the obtained data with 5-tuple information in the entry one by one, to determine whether there is an entry that is consistent with information such as the source address, the destination address, the source port number, the destination port number, and the protocol number in the 5 -tuple information.

In some embodiments, the second module in the driver of the second mobile phone queries whether an entry consistent with the 5-tuple information is stored. That is, the second mobile phone compares the stored entry with the 5-tuple information of the obtained data by using the second module.

For example, if the 5-tuple information in the data packet is 11.11.11.11, 10000, 6, 22.22.22.22 and 80, the 5-tuple information indicates that the data packet is sent from a device whose IP address is 11.11.11.11 to a device whose IP address is 22.22.22.22 and whose port is 80 by using the TCP protocol through the port 10000. If the second mobile phone stores an entry whose source address is 11.11.11.11, source port number is 10000, protocol number is 6, destination address is 22.22.22.22, and source port number is 80, it indicates that the second mobile phone stores an entry that is consistent with the 5-tuple information of the data packet.

It may be understood that, if the app transmitting the service data is the second app, that is, the second module is not disposed in the app, the second mobile phone may transmit, according to a conventional technology, the data to a corresponding app for processing after a plurality of times of copying.

803: When the entry consistent with the connection identification information of the data transmission is queried, the driver of the second mobile phone transparently transmits the data to the corresponding application.

In some embodiments, when the driver of the second mobile phone queries the entry consistent with the connection identification information of the data transmission in the data, as shown by a dashed line in FIG. 6, the second module in the driver of the second mobile phone, that is, the distributed local distribution module, may transparently transmit the data to the corresponding app based on an app ID in the entry, and the data does not need to be processed by using the kernel protocol stack. In other words, the second mobile phone may directly copy the data from the second module to the app corresponding to the app ID.

For example, when the driver of the second mobile phone queries the entry that is consistent with the 5-tuple information in the data, the second module in the second mobile phone may transparently transmit the data to the first module, that is, the distributed receiving module, in the corresponding app. Correspondingly, the first module in the corresponding app may directly receive data from the second module in the driver, and the data does not need to be processed by using the kernel protocol stack, thereby improving the data transmission rate.

In some other embodiments, when the driver of the second mobile phone queries an entry that is consistent with the interface identifier in the data, the second module in the driver of the second mobile phone may distribute the data to the first module in the corresponding app based on the app ID in the entry, to quickly process the data.

If the entry consistent with the identification information of the data transmission in the data is queried, it indicates that the data received by the second mobile phone is consistent with an application corresponding to the entry. In this way, the second mobile phone may directly and transparently transmit the data from the driver to the corresponding app based on the app ID in the entry.

When the entry consistent with the connection identification information of the data transmission in the data is not queried, the second mobile phone may transmit, according to a conventional technology, the data to the corresponding app for processing after a plurality of times of copying the data by using the kernel protocol stack.

If an entry that is consistent with the connection identification information of the data transmission corresponding to currently transmitted data exists, the service corresponding to the data transmission may be used as a high-priority service. The second module in the driver may directly and transparently transmit, based on the app ID, the data corresponding to the high-priority service to the first module in the corresponding app. That is, the data corresponding to the high-priority service is copied from the driver to the corresponding app, and the app processes the data. In this way, packet loss can be reduced, and a transmission throughput rate of a data packet can be improved, thereby reducing a data transmission delay and improving a data transmission rate. 804: The application of the second mobile phone processes the data.

For example, after receiving the data packet or information including the data packet, the first module in the app of the second mobile phone may sequentially perform processing such as decapsulation on the data packet or the information including the data packet, to extract data content in the data packet, and transmit the extracted data content to a corresponding app for data processing. In other words, the second mobile phone may perform fast protocol stack processing in the app, and decapsulate a standard transport layer header and a standard IP layer header, to complete data processing.

In some embodiments, after the app completes data processing, the second mobile phone may delete a corresponding entry stored in the driver, to save storage space. It may be understood that the second mobile phone may also delete the corresponding entry after the driver transparently transmits data to the corresponding application. Because the information in the entry is not required in the subsequent processing, deleting the entry does not affect the data transmission process. In some other embodiments, after the current data transmission connection is disconnected, the second mobile phone may delete a corresponding entry. This can avoid a case in which a connection needs to be repeatedly established during subsequent data transmission.

In this embodiment of this application, the second mobile phone may further periodically update the entry. For example, the second mobile phone may periodically delete an expired entry. The expired entry is a useless entry, for example, an entry that is not deleted in time when the app exits abnormally. The second mobile phone periodically deletes the expired entry, so that storage space and query time can be saved.

In an embodiment, if the second mobile phone receives, within a period of time, a plurality of data packets that meet a preset condition, a buffer queue may be set in the second mobile phone, the plurality of data packets are buffered, and data processing is sequentially performed.

According to the foregoing step 801 to step 804, when the connection identification information of the data transmission corresponding to the data is consistent with the stored entry, the second mobile phone may directly copy the data from the driver to the corresponding app, thereby reducing a quantity of times of copying the data in a process in which the kernel receives data and transfers the data to the application. In other words, the second mobile phone may directly and transparently transmit the data from the driver to a corresponding app, and the corresponding app processes the data without processing the data by using the kernel protocol stack. Therefore, according to the data transmission method provided in this embodiment of this application, the quantity of times of copying the data can be reduced, and the data transmission rate can be improved. Because the data transmission method provided in this embodiment of this application does not need to use the kernel protocol stack, a quantity of data packets sent and received by the kernel may be significantly reduced.

In addition, data of an important app may be directly and transparently transmitted by the driver to the corresponding app, and does not need to be scheduled in the kernel protocol stack in a polling manner together with data of a common app, so that a high-priority service can be quickly distinguished and processed, and a response delay of the high-priority service can be reduced. In some embodiments, one app may be separately bound to one CPU, so as to further improve the data transmission rate.

Because the data transmission method provided in this embodiment of this application does not need to use the kernel protocol stack, when optimization is performed for a specific application, intrusive modification does not need to be performed on the kernel protocol stack, so that flexibility and convenience of modifying the data transmission method can be improved.

It should be noted that, in the foregoing embodiment, distributed deployment is performed on the second mobile phone (the receiving-end electronic device), so that data received by the second mobile phone may be directly and transparently transmitted from a driver to a corresponding app, and the corresponding app processes the data, thereby improving a data receiving rate of the receiving-end electronic device. It may be understood that, when a data sending rate of the first mobile phone (the sending-end electronic device) needs to be increased, a similar setting may also be performed in the sending-end electronic device. For example, a distributed receiving module is disposed in an app of the sending-end electronic device, and a distributed local distribution module is disposed in a driver of the sending-end electronic device. In this way, when the sending-end electronic device sends data, a kernel protocol stack is not used, thereby increasing the data sending rate of the sending-end electronic device, and further improving a data transmission rate.

In addition, in some embodiments, data may be transmitted between the first mobile phone and the second mobile phone. In other words, the first mobile phone may send data to the second mobile phone, and the second mobile phone may also send data to the first mobile phone. In this case, both the first mobile phone and the second mobile phone may be the operating system architecture shown in FIG. 6. The first mobile phone may also generate an entry. It may be understood that the first mobile phone may generate an entry based on the information about the first mobile phone and the information about the second mobile phone. In the entry, a source device is the second mobile phone, and a destination device is the first mobile phone. In another case, the first mobile phone may also obtain an entry generated by the second mobile phone and store the entry. It should be noted that the source device in the entry generated by the second mobile phone and obtained by the first mobile phone is the first mobile phone, and the destination device is the second mobile phone. Therefore, when the first mobile phone receives data from the second mobile phone and compares the identification information of the data transmission in the data (for example, 5-tuple information) with 5-tuple information in the entry, the source address and the destination address of the 5-tuple information in the entry need to be inverted, and the source port number and the destination port number need to be inverted.

For example, after the connection between the first mobile phone and the second mobile phone is established, the first mobile phone may obtain and store the entry generated in the second mobile phone. For another example, after receiving the request message from the first mobile phone, the second mobile phone may send a response message to the first mobile phone. The response message may carry the information about the second mobile phone, for example, an IP address and a port number of the second mobile phone. In this way, the distributed local distribution module of the first mobile phone may also generate an entry based on the information about the first mobile phone and the information about the second mobile phone. It should be noted that, in an entry stored in the first mobile phone, the first mobile phone is a source device, and the second mobile phone is a destination device. In this way, when the second mobile phone sends data to the first mobile phone, that is, when the first mobile phone serves as a receiver, if the first mobile phone queries whether an entry consistent with the 5-tuple information of the data packet exists, the first mobile phone needs to flip the stored entry. That is, the source address in the entry is used as the destination address, the source port number in the entry is used as the destination port number, the destination address in the entry is used as the source address, and the destination port number in the entry is used as the source port number. In this way, when the 5 -tuple information of the data is consistent with the flipped entry, the first mobile phone may directly and transparently transmit the data from the driver to the corresponding app, thereby improving the data transmission rate.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. In actual implementation, there may be another division manner.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the data transmission method in the foregoing embodiments.

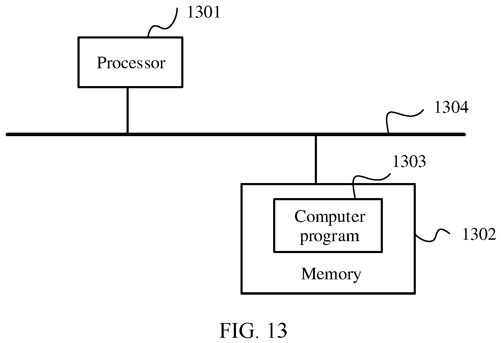

An embodiment of this application further provides an electronic device. As shown in FIG. 13, the electronic device includes one or more processors 1301, a memory 1302, and one or more computer programs 1303. The foregoing devices may be connected by using one or more communication buses 1304. The one or more computer programs 1303 are stored in the memory 1302 and are configured to be executed by the one or more processors 1301. The one or more computer programs 1303 include instructions, and the instructions may be used to perform the steps in the foregoing embodiments. All related content of the steps in the foregoing method embodiments may be cited in function descriptions of corresponding physical devices. Details are not described herein again.

For example, the processor 1301 may be specifically the processor 110 shown in FIG. 5, and the memory 1302 may be specifically the internal memory 121 shown in FIG. 5.

An embodiment of this application further provides a computer-readable storage medium. The computer-readable storage medium stores computer instructions. When the computer instructions are run on an electronic device, the electronic device is enabled to perform the foregoing related method steps, to implement the data transmission method in the foregoing embodiments.

An embodiment of this application further provides a computer program product. When the computer program product runs on a computer, the computer is enabled to perform the foregoing related steps, to implement the data transmission method performed by the electronic device in the foregoing embodiments.

In addition, embodiments of this application further provide an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the data transmission method performed by the electronic device in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division. In actual implementation, another division manner may be used. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A data transmission method, applied to a first electronic device, wherein the first electronic device comprises a driver and an application, and the method comprises:
receiving a request message from a second electronic device, wherein the request message is used to request to establish a data transmission connection, the request message comprises connection information of the second electronic device, and the data transmission connection is used to transmit service data of the application;
generating the entry based on the connection information of the second electronic device, connection information of the first electronic device, and information about the application, wherein the entry comprises connection identification information and application identification information, the connection identification information indicates the data transmission connection, and the application identification information indicates the application;
receiving service data from the second electronic device, wherein the service data carries connection identification information of data transmission; and
if the connection identification information of the data transmission is consistent with the connection identification information in the entry, copying the service data from the driver to the application indicated by the application identification information.

2. The method according to claim 1, wherein the copying the service data from the driver to the application indicated by the application identification information indicates transparently transmitting the service data from the driver to the application indicated by the application identification information.

3. The method according to claim 1 or 2, wherein the connection information of the second electronic device comprises one or more of an address, a port number, a protocol number, or an interface identifier of the second electronic device; and the connection information of the first electronic device comprises one or more of an address, a port number, or an interface identifier of the first electronic device.

4. The method according to any one of claims 1 to 3, wherein the connection identification information in the entry comprises any one type of information in 5-tuple information, 3-tuple information, 7-tuple information, or an interface identifier.

5. The method according to any one of claims 1 to 4, wherein the entry further comprises a minimum time to live TTL value and a maximum TTL value.

6. The method according to any one of claims 1 to 5, wherein after the copying the service data from the driver to the application indicated by the application identification information, the method further comprises:
processing the service data by using the application indicated by the application identification information, wherein the processing comprises decapsulating a standard transport layer header and a standard IP layer header.

7. The method according to any one of claims 1 to 6, wherein after the copying the service data from the driver to the application indicated by the application identification information, the method further comprises:
deleting the entry.

8. The method according to claim 7, wherein the deleting the entry comprises:
deleting the entry after the data transmission connection is disconnected.

9. The method according to any one of claims 1 to 6, wherein the method further comprises:
deleting an expired entry periodically.

10. The method according to any one of claims 1 to 9, wherein the application is an application with a large data throughput, or the application is an application with high use frequency, or the application is a real-time application.

11. The method according to any one of claims 1 to 10, wherein the application comprises a first module, and the driver comprises a second module; and
the copying the service data from the driver to the application indicated by the application identification information comprises:
copying the service data from the second module in the driver to the first module in the application indicated by the application identification information.

12. An electronic device, comprising:
one or more processors and one or more memories, wherein
the one or more memories are coupled to the one or more processors, the one or more memories are configured to store computer program code, the computer program code comprises computer instructions, and when the one or more processors execute the computer instructions, the electronic device performs the data transmission method performed by the first electronic device according to any one of claims 1 to 11.

13. A computer storage medium, comprising computer instructions, wherein when the computer instructions are run on an electronic device, the electronic device is enabled to perform the data transmission method performed by the first electronic device according to any one of claims 1 to 11.

14. A computer program product, wherein when the computer program product runs on a computer, the computer is enabled to perform the data transmission method performed by the first electronic device according to any one of claims 1 to 11.
